# EUROPEAN PATENT APPLICATION

(11) **EP 4 660 481 A1**
(43) Date of publication of application: **10.12.2025**
(21) Application number: 23919903.7
(22) Date of filing: 27.11.2023
(51) Int. Cl.: F16H 3/66

(54) **UNIT**

(30) Priority: 30.01.2023 JP 2023011959
(71) Applicant: Jatco Ltd., Shizuoka 417-8585 (JP)
(72) Inventor: SHIMOZONO, Kazutoshi, Fuji-shi, Shizuoka 417-8585 (JP); AOYAGI, Tsuyoshi, Fuji-shi, Shizuoka 417-8585 (JP); KOSAKA, Masahiro, Fuji-shi, Shizuoka 417-8585 (JP); JO, Junghan, Fuji-shi, Shizuoka 417-8585 (JP)
(74) Representative: Hoefer & Partner Patentanwälte mbB
(86) International application number: PCT/JP2023/042324
(87) International publication number: WO 2024/161768

(57) **Abstract**

[Problem] To reduce the effects of looseness on a common member between planetary gear mechanisms. [Solution] This unit includes: a first planetary gear mechanism having a first sun gear, a first carrier, and a first ring gear; a second planetary gear mechanism having a second sun gear, a second carrier, and a second ring gear; and a shaft passing through the inner circumference of the first sun gear and the second sun gear. The first planetary gear mechanism and the second planetary gear mechanism have a common member having a configuration such that one of the first carrier and the first ring gear and one of the second carrier and the second ring gear rotate integrally. The common member is supported by the shaft, by means of a bearing, at a position between the first sun gear and the second sun gear.

## Description

### Technical Field

The present invention relates to a unit.

### Background Art

Disclosed in Patent Document 1 is a transmission in which a ring gear of one of two planetary gear mechanisms is connected to a carrier of the other.

### Prior Art Documents

### Patent Documents

Patent Document 1: China Patent Application Publication No. 105443707 Specification

### Summary of the Invention

### Problems the Invention Is Intended to Solve

In a unit in which prescribed elements between planetary gear mechanisms such as a ring gear of one and a carrier of the other rotate integrally as a common member, the common member has a large mass compared to the individual components of the common member. For that reason, due to unit play such as gear backlash or spline play, etc., eccentricity of the common member occurs easily and vibration of the common member increases, and as a result, oscillation may occur more easily.

The present invention was created considering these problems, and its purpose is to reduce the effect of play on the common member between planetary gear mechanisms.

### Means for Solving the Problems

A unit of one mode of the present invention comprises: a first planetary gear mechanism having a first sun gear, a first carrier, and a first ring gear; a second planetary gear mechanism having a second sun gear, a second carrier, and a second ring gear; and a shaft that passes through the inner circumference of the first sun gear and the second sun gear. The first planetary gear mechanism and the second planetary gear mechanism have a common member configured so that one of the first carrier and the first ring gear and one of the second carrier and the second ring gear rotate integrally. The common member is supported on the shaft via a bearing at a position between the first sun gear and the second sun gear.

### Effect of the Invention

According to this mode, the common member is configured such that of two elements (carrier, ring gear) positioned at the outer circumference of the sun gear between planetary gear mechanisms, one each (e.g. the first ring gear and the second carrier) integrally rotate with each other, and the common member is supported on the shaft via the bearing. In other words, the common member is supported by providing the support between the shaft and the common member in the radial direction such as by extending the support in the radial direction from the shaft side to the inner radial side of the common member. As a result, it is possible to suppress rattling of the common member, so the effect of unit play on the common member is reduced. Furthermore, disposing the bearing between the first sun gear and the second sun gear means supporting the common member via the bearing near the center rather than the end part of the common member. For that reason, by supporting the common member via the bearing at a position with good balance in the axial direction, it is possible to suitably suppress rattling of the common member, and as a result, possible to further reduce the effect of unit play on the common member.

### Brief Description of the Drawings

[FIG. 1] FIG. 1 is a schematic diagram of a unit of the present embodiment.
[FIG. 2] FIG. 2 is a skeleton diagram of the unit.
[FIG. 3] FIG. 3 is an enlarged view of the main parts of the unit.

### Modes for Carrying Out the Invention

Following is an explanation of an embodiment of the present invention while referring to the attached drawings.

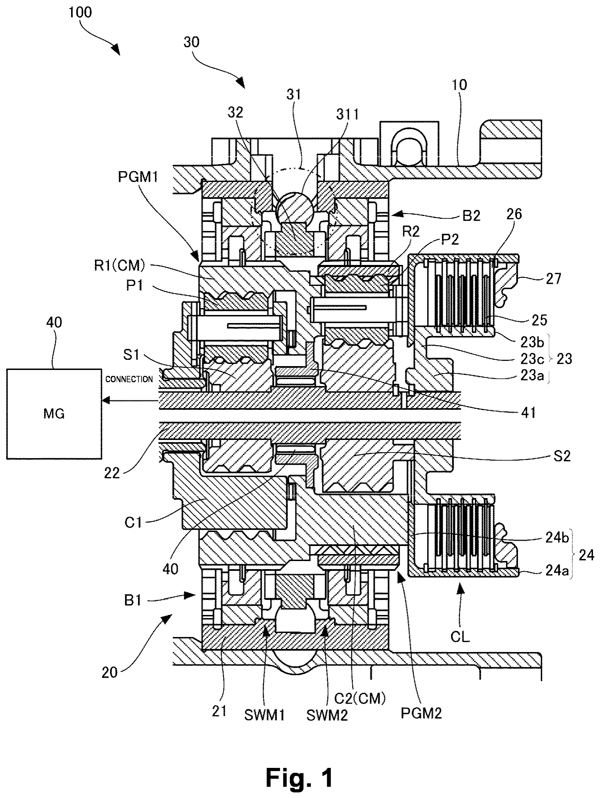

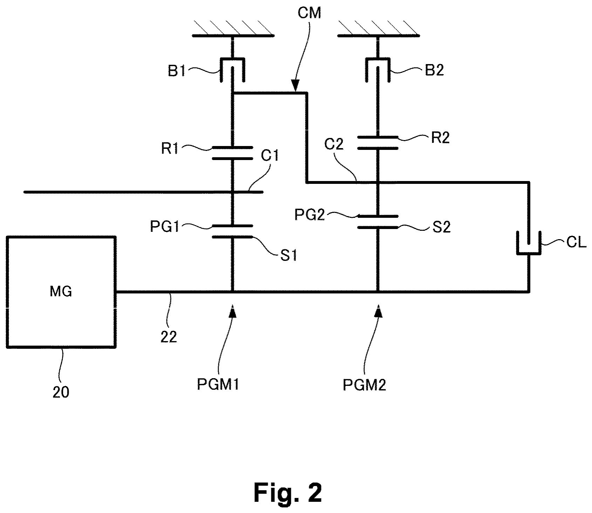

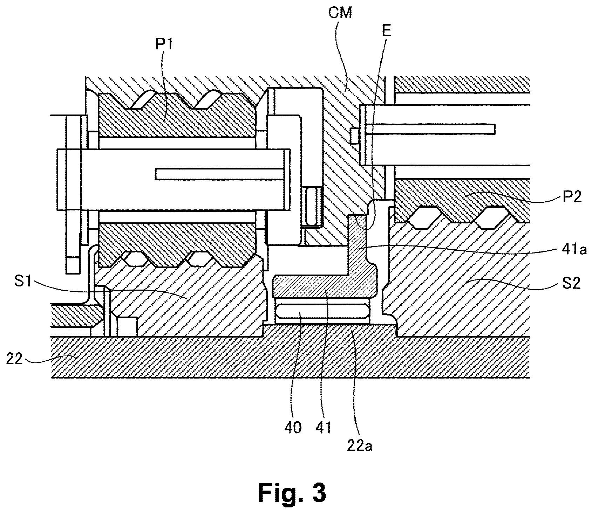

FIG. 1 is a schematic diagram of a unit 100 according to the present embodiment. FIG. 2 is a skeleton diagram of the unit 100. FIG. 3 is an enlarged view of the main parts of the unit 100.

Regarding the term "unit," the unit may also be called, for example, a motor unit (a unit having at least a motor), or a power transmission device (a device having at least a power transmission mechanism). The motor is a rotary electric machine having an electric motor function and/or a generator function (at least one of the electric motor function and the generator function). The power transmission mechanism is for example a gear mechanism and/or a differential gear mechanism. The device (unit) having the motor and the power transmission mechanism is included in both concepts of the motor unit and the power transmission device.

As shown in FIG. 1, the unit 100 comprises a housing 10 and a transmission mechanism 20. The unit 100 is mounted in a vehicle, and that vehicle is an electric vehicle. Power from an MG40 is inputted to the unit 100. The MG40 is a rotary electric machine that functions as a motor generator, and the unit 100 can be understood as a configuration that further includes the MG40.

The housing 10 houses a transmission mechanism 20. The transmission mechanism 20 comprises a case 21, a rotating shaft 22, a first planetary gear mechanism PGM1, a second planetary gear mechanism PGM2, a first brake B1, a second brake B2, and a clutch CL. The case 21 has a cylindrical shape, and is fixed to the inner circumferences of the housing 10. Inside the case 21, the first planetary gear mechanism PGM1 is provided with the first brake B1 interposed, and the second planetary gear mechanism PGM2 is provided with the second brake B2 interposed. The rotating shaft 22 is connected to the MG4, and rotates by power from the MG40. The extension direction of the rotating shaft 22 correlates to the axial direction of the unit 100, and the axial direction means the axial direction of the rotating shaft of the components constituting the unit (e.g. motor, gear mechanism, or differential gear mechanism).

The first planetary gear mechanism PGM1 comprises a first sun gear S1, a first carrier C1, a first ring gear R1, and a first pinion gear P1. The first sun gear S1 is fixed coaxially to the rotating shaft 22. The first carrier C1 rotatably supports the first pinion gear P1. The first pinion gear P1 meshes with both the first sun gear S1 and the first ring gear R1. These points also apply to the second planetary gear mechanism PGM2 that comprises a second sun gear S2, a second carrier C2, a second ring gear R2, and a second pinion gear P2.

The rotating shaft 22 passes through the inner circumference of the first sun gear S1 and the second sun gear S2, and the second planetary gear mechanism PGM2 is arranged aligned in the axial direction with the first planetary gear mechanism PGM1. Therefore, the first planetary gear mechanism PGM1 has a portion that overlaps with the second planetary gear mechanism PGM2 viewed in the axial direction. Overlapping in prescribed direction views including the radial direction view and the axial direction view means overlapping in the prescribed direction, and that there are a plurality of elements aligned in the prescribed direction. For this reason, when a drawing illustrates the plurality of elements aligned in a prescribed direction, it can be assumed that there is a sentence in the specification explaining that the plurality of elements overlap when viewed in the prescribed direction. The second planetary gear mechanism PGM2 is provided on the side away from the MG40 with respect to the first planetary gear mechanism PGM1. The rotating shaft 22 correlates to the shaft.

In the first planetary gear mechanism PGM1 and the second planetary gear mechanism PGM2, the first ring gear R1 and the second carrier C2 constitute the common member CM that rotates integrally. Said another way, the first planetary gear mechanism PGM1 and the second planetary gear mechanism PGM2 have a common member CM having a structure in which the first ring gear R1 and the second carrier C2 integrally rotate. In the common member CM, the first ring gear R1 and the second carrier C2 that are constitutional elements of the common member CM always rotate integrally when rotating. The first ring gear R1 and the second carrier C2 are connected to each other by being formed integrally, forming the common member CM. The second carrier C2 constitutes an output element of the second planetary gear mechanism PGM2. In contrast, the first carrier C1 constitutes the output element of the first planetary gear mechanism PGM1, and also constitutes the output element overall for the first planetary gear mechanism PGM1 and the second planetary gear mechanism PGM2, thereby constituting the output element for the overall transmission mechanism 20.

The first brake B1 is provided on the outer circumference of the first ring gear R1, and is connected to the first planetary gear mechanism PGM1. Also, the second brake B2 is provided on the outer circumference of the second ring gear R2 and is connected to the second planetary gear mechanism PGM2. Therefore, the first brake B1 has a portion that overlaps the first planetary gear mechanism PGM1 viewed in the radial direction, and the second brake B2 has a portion that overlaps the second planetary gear mechanism PGM2 viewed in the radial direction.

The first brake B1 and the second brake B2 are both meshing engagement elements, and have a meshing fastening structure. When the first break B1 is fastened, the first ring gear R1 is fixed to the second carrier C2 as well as the case 21. As a result, the first ring gear R1 and the second carrier C2 are both fixed to the housing 10. In other words, the common member CM is fixed to the housing 10. When the second brake B2 is fastened, the second ring gear R2 is fixed to the case 21. As a result, the second ring gear R2 is fixed to the housing 10.

The clutch CL is arranged aligned in the axial direction with the second planetary gear mechanism PGM2 from the side away from the MG40. The clutch CL is provided for the rotating shaft 22 and the second carrier C2, and performs connection and disconnection between them. The clutch CL is a friction engagement element, and is a multi plate clutch. The clutch CL is an electric clutch, for example, and is provided with a hub 23, a drum 24, a plurality of drive plates 25, a plurality of driven plates 26, and a piston 27.

The hub 23 is fixed coaxially to the rotating shaft 22. The hub 23 has an inner cylindrical part 23a, an outer cylindrical part 23b, and a bottom wall part 23c that connects these, and the inner cylindrical part 23a is fixed coaxially to the rotating shaft 22. The drum 24 has a cylindrical part 24a and a bottom wall part 24b, and is provided coaxially with the rotating shaft 22. The drum 24 opens facing the direction away from the MG40. The hub 23 is housed inside the drum 24, and the outer circumference of the outer cylindrical part 23b of the hub 23 faces the inner circumference of the cylindrical part 24a of the drum 24. The drum 24 is fixed and connected to the second carrier C2 by the ring plate-shaped bottom wall part 24b.

The plurality of drive plates 25 are provided in the hub 23. The plurality of drive plates 25 have a ring shape, and are provided to be able to slide in the axial direction on the outer circumference of the outer cylindrical part 23b. The plurality of driven plates 26 are provided in the drum 24. The plurality of driven plates 26 have a ring shape, and are provided to be able to slide in the axial direction on the inner circumference of the cylindrical part 24a. The plurality of drive plates 25 and the plurality of driven plates 26 are provided aligned alternately one by one in the axial direction.

The piston 27 is provided inside the drum 24. The piston 27 is provided to be able to slide on the opening end inner circumference of the drum 24. The piston 27 is, for example, an electric piston driven by an electric actuator of the clutch CL, and by moving in the clutch CL engagement direction (leftward in FIG. 1) and release direction (rightward in FIG. 1), the plurality of drive plates 25 and the plurality of driven plates 26 are engaged and released.

When the plurality of drive plates 25 and the plurality of driven plates 26 are pressed in the engagement direction by the piston 27 and engaged, the clutch CL is in an engaged state. As a result, the rotating shaft 22 and the second carrier C2 are connected via the clutch CL. Also, when the piston 27 moves from this state to the engagement release direction and the plurality of drive plates 25 and the plurality of driven plates 26 are no longer engaged, the clutch CL goes to an engagement release state. As a result, the connection between the rotating shaft 22 and the second carrier C2 via the clutch CL is disconnected.

The unit 100 further comprises a drive device 30. The drive device 30 is the drive device for the first brake B1 and the second brake B2, and has an actuator 31 and a worm wheel 32. In FIG. 1, the actuator 31 is shown schematically by double dot-dash lines.

The actuator 31 is an electric motor, and has a worm gear 311. The worm gear 311 constitutes the rotating shaft of the actuator 31, and meshes with the worm wheel 32. The worm shaft of the worm gear 311 and the center axis of the worm wheel 32 are orthogonal to each other, and the worm wheel 32 is provided to rotatably driven around the axis center of the unit 100 by power from the actuator 31. Therefore, the longitudinal direction which is the worm axial direction of the worm gear 311 intersects the axial direction of the unit 100. The worm gear 311 and the worm wheel 32 are provided between the first brake B1 and the second brake B2 in the axial direction of the unit 100, and have a portion sandwiched between the first brake B1 and the second brake B2.

A first switching mechanism SWM1 is provided on the first brake B1, and a second switching mechanism SM2 is provided on the second brake B2. The first switching mechanism SWM1 and the second switching mechanism SWM2 both have a ring-shaped external appearance. The first switching mechanism SWM1 has a portion that overlaps the first brake B1 in the axial direction. Similarly, the second switching mechanism SWM2 is provided on the second brake B2, and has a portion that overlaps the second brake B2 in the axial direction. The first switching mechanism SWM1 switches the engagement state of the first brake B1, and the second switching mechanism SWM2 switches the engagement state of the second brake B2. The first switching mechanism SWM1 switches the engagement state of the first brake B1 between a bidirectional restriction state that restricts rotation of the first ring gear R1 in both directions, a one directional restriction state that restricts rotation in one direction, and a release state that does not restrict rotation. The same is true for the second switching mechanism SWM2.

The actuator 31 operates the first brake B1 by driving the first switching mechanism SWM1 via the worm gear 311 and the worm wheel 32. Similarly, the actuator 31 operates the second brake B2 by driving the second switching mechanism SWM2 via the worm gear 311 and the worm wheel 32. The first brake B1 and the second brake B2 correlate to the engagement elements, and the first switching mechanism SWM1 and the second switching mechanism SWM2 both correlate to the operating mechanisms.

The unit 100 further has a bearing 40 and an extension member 41. The bearing 40 is a radial needle bearing, and contacts the rotating shaft 22 on the inner circumference side. The bearing 40 is not limited to being a bearing, and may also be a bush, for example. The bearing 40 is provided between the common member CM and the rotating shaft 22 in the radial direction. The bearing 40 is disposed in an axial direction position that overlaps in the radial direction with the first switching mechanism SWM1 and the second switching mechanism SWM2. Said another way, the first switching mechanism SWM1 and the second switching mechanism SWM2 have a portion that overlaps with the bearing 40 in the radial direction.

As described above, the first switching mechanism SWM1 has a portion that overlaps with the first brake B1 in the axial direction, and the second switching mechanism SWM2 has a portion that overlaps with the second brake B2 in the axial direction. For this reason, the first switching mechanism SWM1 and the second switching mechanism SWM2 disposed having a portion overlapping with the bearing 40 in the radial direction are disposed in extra space formed adjacent in the axial direction to the first brake B1 and the second brake B2. As a result, it is possible to provide the first switching mechanism SWM1 and the second switching mechanism SWM2 using that extra space, so a layout of the unit 100 is realized that contributes to reducing the axial direction dimensions.

The common member CM is supported on the rotating shaft 22 via the bearing 40 at a position (axial direction position) between the first sun gear S1 and the second sun gear S2. As a result, it is possible to suppress rattling of the common member CM, so there is a reduction in the effect of play of the unit 100 such as gear backlash, spline play, etc. on the common member CM. Also, by disposing the bearing 40 between the first sun gear S1 and the second sun gear S2, the common member CM is supported via the bearing 40 at a position with good balance in the axial direction, so rattling of the common member CM is suitably suppressed. As a result, the effect of play of the unit 100 on the common member CM is further reduced. Support of the common member CM on the rotating shaft 22 via the bearing 40 is further performed via the extension member 41.

The extension member 41 has a cylindrical shape, and is interposed between the bearing 40 and the common member CM in the radial direction. The extension member 41 is in contact with the bearing 40 on the inner circumference side, and is provided on the common member CM on the outer circumference side. As shown in FIG. 3, the extension member 41 has an extension part 41a. The extension part 41a is provided on a portion of the extension member 41 on the second gear mechanism PGM2 side in the axial direction, and has a flange shape. The gap in the radial direction formed by the extension member 41 of a portion more to the first gear mechanism PGM1 side in the axial direction than the extension part 41a and the common member CM is used as an oil passage.

The extension member 41 extends support in the radial direction from the rotating shaft 22 side to the inner diameter side of the common member CM. The extension part 41a is fitted in an inlay part E of the common member CM, and as a result, the common member CM is supported on the rotating shaft 22 via the bearing 40 and the extension member 41. It is possible to use a different shape for the extension member 41, and possible for the extension member 41 to be formed integrally with the common member CM. On the other hand, by providing the extension member 41, by extending support in the radial direction from the rotating shaft 22 side to the inner diameter side of the common member CM, it is possible to support the common member CM on the rotating shaft 22 via the bearing 40 without changing the common member CM. Also, by partially extending the extension member 41 in the radial direction using the extension part 41a, it is also possible to secure the oil passage.

The rotating shaft 22 has a protruding part 22a. The protruding part 22a is a part protruding in the radial direction, and is formed as an expanded diameter part protruding along the entire circumference. A plurality of protruding parts 22a may also be provided partially in the circumferential direction, for example. The protruding part 22a is disposed sandwiched by the first sun gear S1 and the second sun gear S2 in the axial direction. Therefore, the rotating shaft 22 has the protruding part 22a sandwiched by the first sun gear S1 and the second sun gear S2 in the axial direction.

The protruding part 22a restricts the axial direction position of the first sun gear S1 and the second sun gear S2 with a step part at both ends in the axial direction. For this reason, displacement of the first sun gear S1 to the second sun gear S2 side in the axial direction and displacement of the second sun gear S2 to the first sun gear S1 side in the axial direction is suppressed by the protruding part 22a.

The bearing 40 is disposed on the protruding part 22a, and the common member CM is supported on the protruding part 22a via the bearing 40. The rigidity of the rotating shaft 22 is increased by the protruding part 22a. For this reason, by disposing the bearing 40 on the protruding part 22a, there is a reduction in the effect on deflection of the rotating shaft 22 that occurs due to supporting the common member CM on the rotating shaft 22 via the bearing 40.

Next, the main effects of the present embodiment are explained.

(1) The unit 100 has: a first planetary gear mechanism PGM1 having a first sun gear S1, a first carrier C1, and a first ring gear R1; a second planetary gear mechanism PGM2 having a second sun gear S2, a second carrier C2, and a second ring gear R2; and a rotating shaft 22 that passes through the inner circumference of the first sun gear S1 and the second sun gear S2. The first planetary gear mechanism PGM1 and the second planetary gear mechanism PGM2 have the common member CM configured so that the first ring gear R1 that is one of the first carrier C1 and the first ring gear R1 and the second carrier C2 that is one of the second carrier C2 and the second ring gear R2 rotate integrally. The common member CM is supported on the rotating shaft 22 via the bearing 40 at a position between the first sun gear S1 and the second sun gear S2.

According to this configuration, the common member CM is supported on the rotating shaft 22 via the bearing 40. In other words, the common member CM has support extended in the radial direction from the rotating shaft 22 side to the inner diameter side of the common member CM or the like to have support by providing a support between the rotating shaft 22 and the common member CM in the radial direction. As a result, it is possible to suppress rattling of the common member CM, so the effect of play of the unit 100 on the common member CM is reduced. Furthermore, by disposing the bearing 40 between the first sun gear S1 and the second sun gear S2, it is possible to support the common member CM via the bearing 40 at a position with good balance in the axial direction, so rattling of the common member CM is suitably suppressed, and as a result, it is possible to further reduce the effect of play of the unit 100 on the common member CM.

(2) The rotating shaft 22 has the protruding part 22a sandwiched by the first sun gear S1 and the second sun gear S2 in the axial direction. The common member CM is supported on the protruding part 22a via the bearing 40.

According to such a configuration, it is possible to suppress displacement in the axial direction of the first sun gear S1 and the second sun gear S2 using the protruding part 22a. Also, the common member CM is supported via the bearing 40 by the protruding part 22a which increases the rigidity of the rotating shaft 22, so it is possible to reduce the effect on deflection of the rotating shaft 22 that occurs due to support of the common member CM on the rotating shaft 22 via the bearing 40.

(3) The unit 100 further has the first brake B1 connected to the first planetary gear mechanism PGM1, the second brake B2 connected to the second planetary gear mechanism PGM2, and the first switching mechanism SWM1 and the second switching mechanism SWM2 that operate the first brake B1 and the second brake B2. The first switching mechanism SWM1 and the second switching mechanism SWM2 have a portion that overlaps the bearing 40 in the radial direction.

According to such a configuration, it is possible to provide the first switching mechanism SWM1 and the second switching mechanism SWM2 using the extra space formed adjacent in the axial direction to the first brake B1 and the second brake B2, so it is possible to realize a layout of the unit 100 that contributes to reducing the axial direction dimensions.

Above, an embodiment of the present invention was explained, but the abovementioned embodiment is nothing more than showing a portion of application examples of the present invention, and the technical scope of the present invention is not limited to the specific configurations of the above embodiment.

For example, with the embodiment described above, a case was explained in which the first ring gear R1 and the second carrier C2 were the common member CM. However, the common member CM may also be the first carrier C1 and the second ring gear R2, the first carrier C1 and the second carrier C2, or the first ring gear R1 and the second ring gear R2.

The unit 100 may also have either of the first brake B1 or the second brake B2 as the engagement element. In this case as well, it is possible to provide the first switching mechanism SWM1 or the second switching mechanism SWM2 using the extra space formed adjacent in the axial direction to either of the first brake B1 or the second brake B2, so it is possible to realize a layout of the unit 100 that contributes to reduction of the axial direction dimensions.

### Explanation of Codes

- 10: Housing
- 20: Transmission mechanism
- 22: Rotating shaft (shaft)
- 22a: Protruding part
- 40: Bearing
- 100: Unit
- B1: First brake (engagement element)
- B2: Second brake (engagement element)
- C1: First carrier
- C2: Second carrier
- CM: Common member
- PGM1: First planetary gear mechanism
- PGM2: Second planetary gear mechanism
- R1: First ring gear
- R2: Second ring gear
- S1: First sun gear
- S2: Second sun gear
- SWM1: First switching mechanism (operating mechanism)
- SWM2: Second switching mechanism (operating mechanism)

## Claims

1. A unit, comprising a first planetary gear mechanism having a first sun gear, a first carrier, and a first ring gear,
a second planetary gear mechanism having a second sun gear, a second carrier, and a second ring gear, and
a shaft that passes through the inner circumference of the first sun gear and the second sun gear, wherein
the first planetary gear mechanism and the second planetary gear mechanism have a common member configured so that one of the first carrier and the first ring gear and one of the second carrier and the second ring gear rotate integrally, and
the common member is supported on the shaft via a bearing at a position between the first sun gear and the second sun gear.

2. The unit according to claim 1, wherein
the shaft has a protruding part sandwiched by the first sun gear and the second sun gear in the axial direction, and
the common member is supported on the protruding part via the bearing.

3. The unit according to claim 2, further comprising
an engagement element that is connected to at least one of the first planetary gear mechanism and the second planetary gear mechanism, and
an operating mechanism for operating the engagement element, wherein
the operating mechanism has a part that overlaps the bearing in the radial direction.
